# EUROPÄISCHE PATENTSCHRIFT

(11) **EP 1 194 603 B1**
(45) Veröffentlichungstag und Bekanntmachung des Hinweises auf die Patenterteilung: **13.11.2002**
(21) Anmeldenummer: 00952968.6
(22) Anmeldetag: 31.05.2000
(51) Int. Cl.: C22C 19/05, B23K 35/30

(54) **AUSTENITISCHE NI-CR-MO-FE-LEGIERUNG**
AUSTENITIC NI-CR-MO-FE ALLOY
ALLIAGE NI-CR-MO-FE AUSTENITIQUE

(30) Priorität: 25.06.1999 DE 19929354
(43) Veröffentlichungstag der Anmeldung: 10.04.2002
(73) Patentinhaber: ThyssenKrupp VDM GmbH, 58791 Werdohl (DE)
(72) Erfinder: BRILL, Ulrich, 58300 Wetter/Ruhr (DE); GUTSCH, Manfred, 58507 Lüdenscheid (DE); MAST, Ralph, 58769 Nachrodt (DE)
(86) Internationale Anmeldenummer: EP0004961
(87) Internationale Veröffentlichungsnummer: WO01000893

(56) Entgegenhaltungen:
- EP-A- 0 092 397
- WO-A-95/31579
- US-A- 3 650 734
- US-A- 4 129 464
- US-A- 4 533 414
- CHEMICAL ABSTRACTS, vol. 132, no. 12, 20. März 2000 (2000-03-20) Columbus, Ohio, US; abstract no. 155111, BRILL, U. ET AL: "Nicrofer 5020 hMo - a new multipurpose material for chemical technology" XP002152216 & KORROSIONSBESTAENDIGE WERKST. CHEM.-, ENERG.- UMWELTTECH., KORROSIONSSCHUTZSEMIN. (1999), PAPER7/1-PAPER7/14 PUBLISHER: INSTITUT FUE KORROSIONSSCHUTZ DRESDEN GMBH, DRESDEN, GERMANY. ,
- DATABASE REGISTRY [Online] RN 146357-53-1, "Hastelloy G-50" XP002152217

## Beschreibung

Die Erfindung betrifft eine austenitische warm- und kaltverformbare Legierung.

Bisher kommen als Werkstoffe für mechanische und zugleich korrosionschemisch stark beanspruchte Bauteile einerseits austenitische, austenitisch-ferritische, ferritische sowie ferritsch-martensitische Stähle und andererseits Nickel-Basislegierungen zum Einsatz. Die mechanische Festigkeit austenitischer Stähle ist bei etlichen Anwendungen nicht ausreichend. Nachteilig bei ferritisch-austenitischen Stählen sowie bei ferritischen und ferritisch-martensitischen Stählen ist häufig ihr schlechtes Verarbeitungsverhalten (Warmformgebung, Schweißbarkeit) und die zum Teil nur unzureichende Korrosionsbeständigkeit.

Durch die EP-B1 0 334 410 ist eine Nickel-Chrom-Molybdän-Legierung bekannt geworden, die in (Masse-%) folgende Legierungselemente enthält:
22,0 bis 24,0 Chrom
15,0 bis 16,5 Molybdän
bis 0,3 Wolfram
bis 1,5 Eisen
bis 0,3 Kobalt
bis 0,1 Silicium
bis 0,5 Mangan
bis 0,015 Kohlenstoff
bis 0,4 Vanadium
0,1 bis 0,4 Aluminium
0,001 bis 0,4 Magnesium
0,001 bis 0,01 Calcium

Rest Nickel, einschließlich unvermeidbarer Verunreinigungen

Durch die EP-B1 0 247 577 ist eine aushärtbare Chrom und Molybdän enthaltene Legierung auf Nickelbasis bekannt geworden, die (in Masse-%) folgende Legierungsbestandteile beinhaltet:
Kohlenstoff max. 0,1
Mangan max. 5
Silicium max. 1
Phosphor max. 0,03
Schwefel max. 0,03
Chrom 16 bis 24
Molybdän 7 bis 12
Wolfram max. 4
Niob 2 bis 6
Titan 0,50 bis 2,5
Aluminiumspuren bis 1
Bor max. 0,02
Zirkonium max. 0,050
Kobalt max. 5
Kupfer 0 bis 3
Stickstoff max. 0,04
Eisen max. 20
die darüber hinaus mindestens 50 % Nickel als Rest sowie herstellungsbedingte Verunreinigungen beinhaltet, wobei die Summe aus Chrom und Molybdän nicht größer als 31 ist und die Summe aus Niob, Titan und Aluminium so bemessen ist, daß deren gesamter Atomgewichtsprozentsatz 3,5 bis 5 beträgt und in lösungsgeglühter und ausgehärteter Form eine 0,2 % Dehngrenze von mehr als 100 ksi (690 MN/m²) kombiniert mit einer Beständigkeit gegen Loch- und Spaltkorrosion sowie gegen Spannungsrißkorrosion in einer Chlorid- und Sulfidumgebung bei erhöhten Temperaturen bis zu 260°C aufweist, ohne ein Arbeiten unterhalb ihrer Umkristallisationstemperatur zu erfordern.

Liegen extreme Korrosionsbedingungen vor, ist es für viele Einsatzgebiete notwendig auf verhältnismäßig teure Ni-Cr-Mo-Legierungen mit zum Teil auf max. 1 % limitierte Fe-Gehalte zurückzugreifen. Aber auch die im Markt etablierten Legierungen genügen nicht mehr allen Anforderungen in der heutigen chemischen und petrochemischen Verfahrenstechnik, sowie in der aktuellen Umweltschutztechnik, insbesondere dann, wenn zugleich eine hohe Streckgrenze bzw. Zugfertigkeit gefordert ist bzw. sind. Probleme entstehen vielfach dann, wenn bekannte Legierungen als Schweißzusatzwerkstoffe, insbesondere im Bereich der Offshore-Technik, zum Einsatz gelangen, wo überwiegend 6-Mo-Stähle, Duplex- und Superduplexstähle verschweißt werden.

Hochfestigkeits-Korrosionbeständige Ni-Legierungen sind in der Technik under dem Namen "Hastelloy G-50" (UNS N06950) oder durch die US-A-3 650 734 bekannt geworden.

Der Erfindung liegt die Aufgabe zugrunde, eine Legierung bereitzustellen, die insbesondere für extreme Korrosionsbedingungen einsetzbar ist und gleichzeitig eine außergewöhnlich hohe Streckgrenze bzw. Zugfertigkeit aufweist. Die Legierung soll eine hohe Beständigkeit gegenüber Loch- und Spaltkorrosion sowie abtragende Korrosion aufweisen und soll darüber hinaus ohne Probleme herstellbar und verarbeitbar sein. Aus diesem Grund muß die geforderte Festigkeit der Legierung bereits im lösungsgeglühten bzw. weichgeglühten Zustand vorliegen, so daß auf eine weitere Aushärte-Wärmebehandlung verzichtet werden kann.

Diese Aufgabe wird gelöst durch eine austenitische warm- und kaltverformbare Legierung zum Einsatz in wäßrigen, chloridhaltigen oxidierenden Medien, bestehend aus folgenden Legierungselementen (in Masse-%):

| | |
|---|---|
| Cr | 18,0 - 21,0 |
| Fe | 12,0 - 16,0 |
| Mo | 9,0 - 13,0 |
| Co | max. 1,0 |
| W | 0,5 - 2,5 |
| C | max. 0,025 |
| N | 0,05 - 0,25 |
| Mn | max. 0,50 |
| Si | max. 0,50 |
| Ti | max. 0,02 |
| Nb | 0,05 - 0,5 |
| Cu | max. 0,3 |
| P | max. 0,010 |
| Al | 0,05 - 0,5 |
| S | max. 0,005 |
| Mg | 0,005 - 0,030 |
| Ca | 0,001 - 0,01 |
| V | max. 0,5 |
| B | max. 0,005 |
| Zr | 0,001 - 0,030 |

bedarfsweise Ta, wobei die Summe aus Nb und Ta max. 0.30 beträgt
Rest Nickel, einschließlich herstellungsbedingter Verunreinigungen.

Eine bevorzugte Legierung wird gebildet aus folgenden Legierungselementen (in Masse-%):

| | |
|---|---|
| Cr | 19,0 - 20,0 |
| Fe | 13,0 - 15,0 |
| Mo | 10,0 - 12,0 |
| Co | max. 1,0 |
| W | 1,0 - 2,0 |
| C | max. 0,020 |
| N | 0,05 - 0,15 |
| Mn | max. 0,50 |
| Si | max. 0,50 |
| Ti | max. 0,02 |
| Nb | 0,1 - 0,3 |
| Cu | max. 0,3 |
| P | max. 0,010 |
| Al | 0,10 - 0,35 |
| S | max. 0,005 |
| Mg | 0,006 - 0,020 |
| Ca | 0,001 - 0,005 |
| V | max. 0,30 |
| B | max. 0,002 |
| Zr | 0,005 - 0,025 |

Rest Nickel einschließlich erschmelzungsbedingter Verunreinigungen.

Vorzugsweise werden die Summengehalte aus Aluminium + Titan auf max. 0,30 (in Masse-%) beschränkt. Gleiches gilt für die Summengehalte aus Niob + Tantal, die ebenfalls auf max. 0,30 (in Masse-%) eingestellt werden.

Die Anhebung des Eisengehaltes der erfindungsgemäßen Legierung auf (in Masse-%) 13 bis 15 führt einerseits zu einer verbesserten Verarbeitbarkeit und Verformbarkeit, andererseits jedoch auch zu einer erheblichen Kostensenkung aufgrund des geringeren Metallpreises und der Absenkung der Fertigungskosten. Im Gegensatz zu der allgemeinen Auffassung, wonach für Auftragsschweißungen mit Ni-Cr-Mo-Legierungen auf un- oder niedriglegierten Stählen Eisengehalte < 1 % benötigt werden, d.h. eine Eisenaufmischung im Schweißgut wird weitestgehend verhindert, zeigt sich an vergleichenden Untersuchungen der erfindungsgemäßen Legierung A und der Vergleichslegierung B, die als Schweißzusatz für ein- und zweilagige Auftragsschweißungen auf St-52 verwendet wurden, daß der Eisengehalt der mit der erfindungsgemäßen Legierung A durchgeführten Auftragsschweißung sogar niedriger ist, als bei der der Auftragsschweißung der Vergleichslegierung B. Dies ist in Tabelle 1 verdeutlicht.

**Tabelle 1:**

| Chemische Analysen der Auftragsschweißungen mit der erfindungsgemäßen Legierung A sowie mit der Vergleichslegierung B auf St-52. | | | | |
|---|---|---|---|---|
| Elemente | **1-lagig** | | **2-lagig** | |
| | Leg. A | Leg. B | Leg. A | Leg. B |
| Ni | Rest | 30 | Rest | 41,5 |
| Cr | 12,2 | 11 | 16,5 | 14,5 |
| Mo | 6,55 | 4,2 | 9,1 | 6 |
| Fe | 47,9 | 52,5 | 28,1 | 35 |
| W | 0,75 | n.b. | 1,13 | n.b. |

Die chemische Zusammensetzung (Masse-%) der Vergleichslegierung B stellt sich wie folgt dar:

| | |
|---|---|
| Cr | 22,0 |
| Fe | 3,0 |
| C | 0,025 |
| Mn | 0,40 |
| Si | 0,40 |
| Mo | 8,0 |
| Co | 1,0 |
| Al | 0,40 |
| Ti | 0,40 |
| Nb | 3,5 |
| P | 0,010 |
| S | 0,010 |

Die Absenkung des Niob-Gehaltes der erfindungsgemäßen Legierung A auf (in Masse-%) vorzugsweise 0,1 bis 0,3 bewirkt eine weitaus bessere Schweißbarkeit als bei der Vergleichslegierung B.

Des weiteren wird hierdurch auch eine fehler- und ausscheidungsfreie, mechanische hochbelastbare Schweißverbindung mit hochstickstoffhaltigen Duplex- und Superduplexstählen erst möglich.

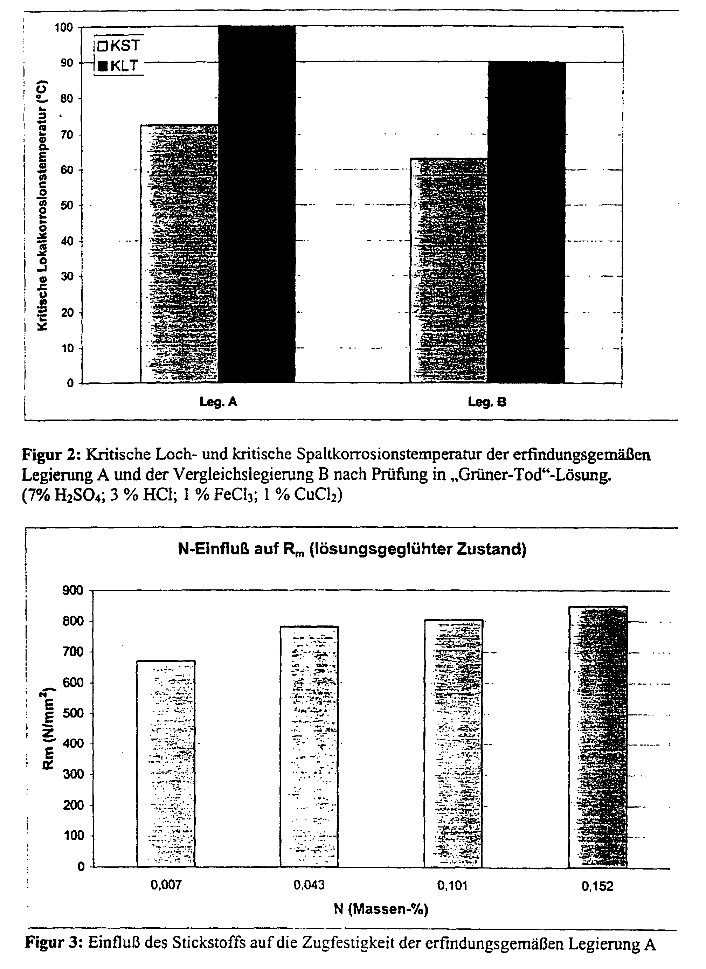

Die Anhebung des Molybdän-Gehaltes der erfindungsgemäßen Legierung A auf (in Masse-%) 10 bis 12, sowie die Erhöhung des W-Gehaltes auf (in Masse-%) 1 bis 2, führt im Vergleich zu Legierung B zu einer erhöhten Loch- und Spaltkorrosionsbeständigkeit, wie dies durch Figur 2 dokumentiert wird.

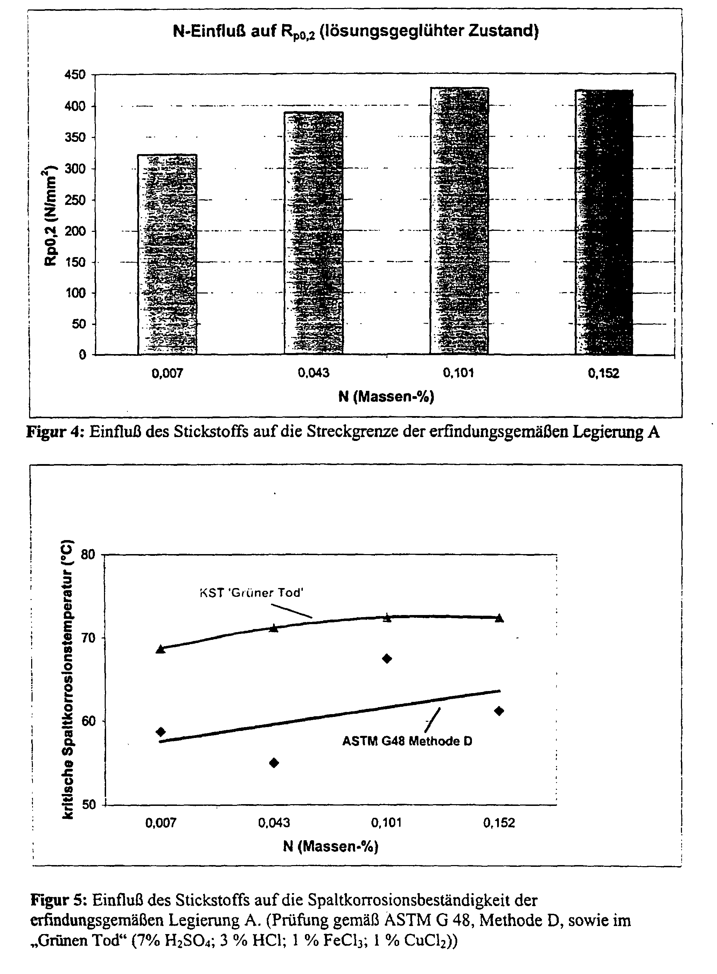

Im Gegensatz zu der Lehre der EP-B1 0 247 577, wonach Stickstoffgehalte bis zu 0,04 % zugelassen werden und keine genauere Spezifikation bezüglich des Stickstoffeinflusses vorgenommen wird, zeigte sich in den Untersuchungen zum Einfluß des Stickstoffes in der erfindungsgemäßen Legierung A, daß Stickstoff einerseits die Streckgrenze und die Zugfestigkeit, andererseits die Spaltkorrosionsbeständigkeit der erfindungsgemäßen Legierung A deutlich erhöht. In Figur 3 ist dies beispielhaft anhand der Zugfestigkeit Rₘ über dem Stickstoffgehalt und in Figur 4 anhand der Streckgrenze R_{p0,2} über dem Stickstoffgehalt für die erfindungsgemäße Legierung A eingetragen. Die Streckgrenze wird um ca. 30 %, die Zugfestigkeit um ca. 20 % erhöht.

Die Erhöhung der Spaltkorrosionsbeständigkeit der erfindungsgemäßen Legierung durch die Zugabe von Stickstoff wird in Figur 5 deutlich. Nach dem Stand der Technik wird die Spaltkorrosionsbeständigkeit gemäß ASTM G48, Methode D sowie in "Grüner Tod"-Lösung (7 % H₂SO₄, 3 % HCI, 1 % FeCl₃, 1 % CuCl₂) bestimmt. Die kritische Spaltkorrosionstemperatur steigt bei beiden Prüfungen mit zunehmendem Stickstoffgehalt an.

Die Legierung gemäß vorliegender Erfindung findet Anwendung als Schweißzusatzwerkstoff in der Offshore-Industrie, insbesondere für Verbindungsschweißungen längsnahtgeschweißter Rohre aus 6-Mo-Stählen, Duplex- und Superduplexstählen.

Darüber hinaus besteht die Möglichkeit, die erfindungsgemäße Legierung als Schweißzusatzwerkstoff für Auftragsschweißungen, insbesondere für Flansche im Offshore-Bereich oder Boiler-Rohre in Müllverbrennungsanlagen einzusetzen.

Schließlich ist es auch möglich, die erfindungsgemäße Legierung als Auftragsschweißband im Anlagenbau einzusetzen und sie darüber hinaus in Gaskanälen von Rauchgasentschwefelungsanlagen zu verwenden.

Die erfindungsgemäße Legierung kann einem weiteren Gedanken der Erfindung gemäß aus Schrotten vorgebbarer Legierungszusammensetzungen erschmolzen werden, so daß sich die in den gegenständlichen Ansprüchen definierten engen Spreizungen der einzelnen Legierungselemente einstellen.

## Patentansprüche

1. Austenitische warm- und kaltverformbare Legierung zum Einsatz in wäßrigen, chloridhaltigen oxidierenden Medien, bestehend aus folgenden Legierungselementen (in Masse-%):
| | |
|---|---|
| Cr | 18,0 bis 21,0 |
| Fe | 12,0 bis 16,0 |
| Mo | 9,0 bis 13,0 |
| Co | max. 1,0 |
| W | 0,5 bis 2,5 |
| C | max. 0,025 |
| N | 0,05 bis 0,25 |
| Mn | max. 0,50 |
| Si | max. 0,50 |
| Ti | max. 0,02 |
| Nb | 0,05 bis 0,5 |
| Cu | max. 0,3 |
| P | max. 0,010 |
| Al | 0,05 bls 0,5 |
| S | max. 0,005 |
| Mg | 0,005 bis 0,030 |
| Ca | 0,001 bis 0,01 |
| V | max. 0,5 |
| B | max. 0,005 |
| Zr | 0,001 bis 0,030 |
bedarfsweise Ta, wobei die Summe aus Nb und Ta max. 0,30 beträgt
Rest Nickel, einschließlich herstellungsbedingter Verunrelnigungen.

2. Legierung nach Anspruch 1 **gekennzeichnet durch** folgende Legierungselemente (in Masse-%):
| | |
|---|---|
| Cr | 19,0 bis 20,0 |
| Fe | 13,0 bis 15,0 |
| Mo | 10,0 bis 12,0 |
| Co | max. 1,0 |
| W | 1,0 bis 2,0 |
| C | max. 0,020 |
| N | 0,05 bis 0,15 |
| Mn | max. 0,50 |
| Si | max. 0,50 |
| Ti | max. 0,02 |
| Nb | 0,1 bis 0,3 |
| Cu | max. 0,3 |
| P | max. 0,010 |
| Al | 0,10 bis 0,35 |
| S | max. 0,005 |
| Mg | 0,006 bis 0,020 |
| Ca | 0,001 bis 0,005 |
| V | max. 0,30 |
| B | max. 0,002 |
| Zr | 0,005 bis 0,025 |
Rest Nickel, einschließlich erschmelzungsbedingter Verunreinigungen.

3. Legierung nach Anspruch 1 oder 2, **dadurch gekennzeichnet, daß** die Summe (in Masse-%) aus Al + Ti max. 0,30 beträgt.

4. Legierung nach einem der Ansprüche 1 bis 3, **dadurch gekennzeichnet, daß** zur Erzeugung der beanspruchten Legierungszusammensetzung dieselben Schrottmaterialien eingesetzt werden.

5. Legierung nach einem der Ansprüche 1 bis 4, **dadurch gekennzeichnet, daß** insbesondere drei Schrottmaterialien unterschiedlicher Mischungsverhältnisse miteinander kombiniert werden.

6. Legierung nach einem der Ansprüche 1 bis 5, **dadurch gekennzeichnet, daß** eine Wirksumme WS = % Cr + 3 [% Mo + 0,5 % W] + 16 % N ≥ 54 eingestellt wird.

7. Legierung nach einem der Ansprüche 1 bis 6, **dadurch gekennzeichnet, daß** eine Streckgrenze R_{p0,2} von mindestens 400 N/mm² im lösungsgeglühten Zustand eingestellt wird.

8. Legierung nach einem der Ansprüche 1 bis 7, **dadurch gekennzeichnet, daß** eine Kombination von WS ≥ 54 mit R_{p0,2} ≥ 400 N/mm² im lösungsglühten Zustand eingestellt wird.

9. Verwendung der Legierung nach einem der Ansprüche 1 bis 8 als Schweißzusatzwerkstoff in der Offshore-Industrie, insbesondere für Verbindungsschweißungen längsnahtgeschweißter Rohre aus 6-Mo-Stählen, Duplex- und Superduplexstählen.

10. Verwendung der Legierung nach einem der Ansprüche 1 bis 8 als Schweißzusatzwerkstoff für Auftragsschweißungen, insbesondere für Flansche im Offshore-Bereich oder Boiler-Rohre in Müllverbrennungsanlagen.

11. Verwendung der Legierung nach einem der Ansprüche 1 bis 8 als Auftragsschweißband im Anlagenbau.

12. Verwendung der Legierung nach einem der Ansprüche 1 bis 8 in Gaskanälen von Rauchgasentschwefelungsanlagen.

## Claims

1. Austenitic hot and cold-formable alloy for the use in aqueous, chloride bearing oxidizing media, consisting of the following alloy elements (in % by mass):
| | |
|---|---|
| Cr | 18.0 - 21.0 |
| Fe | 12.0 - 16.0 |
| Mo | 9.0 - 13.0 |
| Co | max. 1.0 |
| W | 0.5 - 2.5 |
| C | max. 0.025 |
| N | 0.05 - 0.25 |
| Mn | max. 0.50 |
| Si | max. 0.50 |
| Ti | max. 0.02 |
| Nb | 0.05 - 0.5 |
| Cu | max. 0.3 |
| P | max. 0.010 |
| Al | 0.05 - 0.5 |
| S | max. 0.005 |
| Mg | 0.005 - 0.030 |
| Ca | 0.001 - 0.01 |
| V | max. 0.5 |
| B | max. 0.005 |
| Zr | 0.001 - 0.030 |
in case of need Ta, the sum of Nb and Ta being max. 0.30,
rest nickel including production dependent impurities.

2. Alloy according to claim 1 **characterized by** the following alloy elements (in % by mass):
| | |
|---|---|
| Cr | 19.0 - 20.0 |
| Fe | 13.0 - 15.0 |
| Mo | 10.0 - 12.0 |
| Co | max. 1.0 |
| W | 1.0 - 2.0 |
| C | max. 0.020 |
| N | 0.05 - 0.15 |
| Mn | max. 0.50 |
| Si | max. 0.50 |
| Ti | max. 0.02 |
| Nb | 0.1 - 0.3 |
| Cu | max. 0.3 |
| P | max. 0.010 |
| Al | 0.10 - 0.35 |
| S | max. 0.005 |
| Mg | 0.006 - 0.020 |
| Ca | 0.001 - 0.005 |
| V | max. 0.30 |
| B | max. 0.002 |
| Zr | 0.005 - 0.025 |
rest nickel including impurities from the melting process.

3. Alloy according to claim 1 or 2, **characterized in that** the sum (in % by mass) of Al + Ti is max. 0.30.

4. Alloy according to one of the claims 1 through 3, **characterized in that** for the production of the claimed alloy composition, the same scrap metals are used.

5. Alloy according to one of the claims 1 through 4, **characterized in that** in particular three scrap metals having different proportions of ingredients are combined with each other.

6. Alloy according to one of the claims 1 through 5, **characterized in that** a sum of efficiency WS = % Cr + 3 [% Mo + 0.5 % W] + 16 % N ≥ 54 is set.

7. Alloy according to one of the claims 1 through 6, **characterized in that** a yielding point R_{p0.2} of at least 400 N/mm² in the solution annealed state is set.

8. Alloy according to one of the claims 1 through 7, **characterized in that** a combination of WS ≥ 54 with R_{p0.2} ≥ 400 N/mm² in the solution annealed state is set.

9. Use of the alloy according to one of the claims 1 through 8 as filler material in the offshore industry, in particular for joint welding of tubes with straight bead made of 6-Mo steels, duplex and super-duplex steels.

10. Use of the alloy according to one of the claims 1 through 8 as filler material for build-up welds, in particular for flanges in the offshore field or boiler tubes in incinerating plants.

11. Use of the alloy according to one of the claims 1 through 8 as build-up weld band in the terotechnology.

12. Use of the alloy according to one of the claims 1 through 8 in gas channels of flue gas desulfurizing plants.

## Revendications

1. Alliage austénitique et formable à chaud et à froid pour l'utilisation dans des milieux aqueux et oxydants, qui contiennent du chlorure, composé des éléments d'alliage suivants (en % en poids) :
| | |
|---|---|
| Cr | 18,0 - 21,0 |
| Fe | 12,0 - 16,0 |
| Mo | 9,0 - 13,0 |
| Co | max. 1,0 |
| W | 0,5 - 2,5 |
| C | max. 0,025 |
| N | 0,05-0,25 |
| Mn | max. 0,50 |
| Si | max. 0,50 |
| Ti | max. 0,02 |
| Nb | 0,05-0,5 |
| Cu | max. 0,3 |
| P | max. 0,010 |
| Al | 0,05 - 0,5 |
| S | max. 0,005 |
| Mg | 0,005 - 0,030 |
| Ca | 0,001 - 0,01 |
| V | max. 0,5 |
| B | max. 0,005 |
| Zr | 0,001- 0,030 |
en cas de besoin Ta, la somme de Nb et de Ta étant max. 0,30,
le reste étant du nickel, des impuretés résultant de l'élaboration y compris.

2. Alliage selon la revendication 1, **caractérisé par** les éléments d'alliage suivants (en % en poids) :
| | |
|---|---|
| Cr | 19,0 - 20,0 |
| Fe | 13,0 - 15,0 |
| Mo | 10,0 - 12,0 |
| Co | max. 1,0 |
| W | 1,0 - 2,0 |
| C | max. 0,020 |
| N | 0,05 - 0,15 |
| Mn | max. 0,50 |
| Si | max. 0,50 |
| Ti | max. 0,02 |
| Nb | 0,1 - 0,3 |
| Cu | max. 0,3 |
| P | max. 0,010 |
| Al | 0,10 - 0,35 |
| S | max. 0,005 |
| Mg | 0,006 - 0,020 |
| Ca | 0,001 - 0,005 |
| V | max. 0,30 |
| B | max. 0,002 |
| Zr | 0,005 - 0,025 |
le reste étant du nickel, des impuretés résultant de l'élaboration y compris.

3. Alliage selon la revendication 1 ou 2, **caractérisé en ce que** la somme (en % en poids) composée de Al + de Ti est max. 0,30.

4. Alliage selon l'une des revendications 1 à 3, **caractérisé en ce qu'**on utilise pour l'élaboration de la composition d'alliage revendiquée les mêmes mitrailles.

5. Alliage selon l'une des revendications 1 à 4, **caractérisé en ce qu'**on combine notamment trois mitrailles ayant des rapports des ingrédients différents.

6. Alliage selon l'une des revendications 1 à 5, **caractérisé en ce qu'**on fixe une somme d'efficacité WS = % Cr + 3 [% Mo + 0,5 % W] + 16 % N ≥ 54.

7. Alliage selon l'une des revendications 1 à 6, **caractérisé en ce qu'**on fixe une limite élastique R_{p0,2} d'au moins 400 N/mm² dans l'état recuit de mise en solution.

8. Alliage selon l'une des revendications 1 à 7, **caractérisé en ce qu'**on fixe une combinaison de WS ≥ 54 avec R_{p0,2} ≥ 400 N/mm² dans l'état recuit de mise en solution.

9. Utilisation de l'alliage selon l'une des revendications 1 à 8 en tant que métal d'apport dans l'industrie marine, notamment pour des soudures des tuyaux ayant des soudures longitudinales et composés d'aciers de 6-Mo, des aciers duplex et superduplex.

10. Utilisation de l'alliage selon l'une des revendications 1 à 8 en tant que métal d'apport pour des soudages à superposition, notamment pour des brides dans le domaine marin ou pour des tuyaux chauffe-eau des usines d'incinération d'ordures ménagères.

11. Utilisation de l'alliage selon l'une des revendications 1 à 8 en tant que ruban de soudage à superposition dans la construction d'installations technologiques.

12. Utilisation de l'alliage selon l'une des revendications 1 à 8 dans des arrivées de gaz des installations de désulfuration des gaz de fumée.
